# EUROPEAN PATENT SPECIFICATION

(11) **EP 2 217 771 B1**
(45) Date of publication and mention of the grant of the patent: **23.03.2011**
(21) Application number: 08840939.6
(22) Date of filing: 22.10.2008
(51) Int. Cl.: E04D 1/30, H01L 31/048, E04D 1/34, F24J 2/00

(54) **MODULAR ELEMENTS FOR BUILDING ROOFS**
MODULARE ELEMENTE ZUM BAU VON DÄCHERN
ÉLÉMENTS MODULAIRES POUR TOITS DE BÂTIMENTS

(30) Priority: 23.10.2007 IT VE20070077; 31.10.2007 IT VE20070084; 27.03.2008 IT VE20080026
(43) Date of publication of application: 18.08.2010
(73) Proprietor: Mind S.r.L., 30020 Noventa Di Piave (IT)
(72) Inventor: BORTOLETTO, Sante, I-30024 Musile Di Piave (IT); CORVAGLIA, Roberto, I-30022 Ceggia (IT)
(74) Representative: Piovesana, Paolo
(86) International application number: PCT/IB2008/002813
(87) International publication number: WO 2009/053813

(56) References cited:
- EP-A- 1 990 585
- WO-A-2008/052816
- DE-C1- 19 953 409
- FR-A- 2 505 910
- FR-A- 2 640 305
- FR-A- 2 679 280
- US-A- 5 651 226

## Description

The present invention relates to modular elements for roofs of buildings.

Building roofs formed from curved channel tiles and curved cover tiles are known: the channel tiles are disposed in several parallel rows extending from the gutter line to the ridge line with their concavity facing upwards and partially superposed on each other, the cover tiles being disposed with their concavity facing downwards in a partially superposed condition to form rows straddling pairs of side by side rows of channel tiles.

Modular elements according to the preamble of claim 1 are described in the document FR 2679280 A.

An object of the invention is to provide a multifunctional channel tile which can be used selectively either with traditional curved cover tiles to form traditional roofs or with various types of technological cover tiles to hence obtain photovoltaic, thermal and other roof coverings.

This and other objects, which will be apparent from the ensuing description are attained according to the invention by modular elements for forming building roof coverings as described in claim 1.

The present invention is further clarified below with reference to the accompanying drawings, in which:

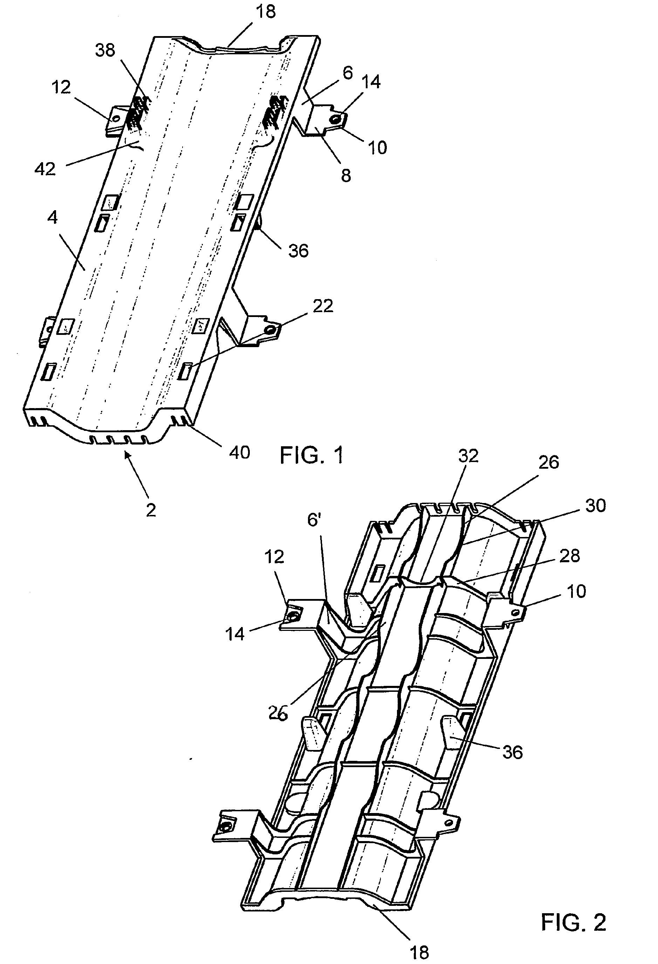

- Figure 1: is a perspective view from above of a channel tile according to the invention,
- Figure 2: is a perspective view thereof from below,
- Figure 3: shows an assembly of four channel tiles,
- Figure 4: shows an assembly of four channel tiles and four overlying traditional clay cover tiles,
- Figure 5: is a partially exploded general perspective view of a roof portion made with the modular elements of the invention to form a photovoltaic roof covering,
- Figure 6: is a plan view thereof,
- Figure 7: is a partial view thereof in enlarged vertical section on the line VII-VII of Figure 6,
- Figure 8: is a partial view thereof in enlarged vertical section on the line VIII-VIII of Figure 6,
- Figure 9: is a perspective partial view from above showing the roof portion of Figure 5 without the photovoltaic panels and without the transparent upper covering,
- Figure 10: is a perspective view of a cover tile seen from above,
- Figure 11: is a perspective view thereof seen from below,
- Figure 12: is a perspective view seen from below, showing the transparent element to be applied to the cover tile of Figure 10,
- Figure 13: is a perspective view of a particular embodiment of a cover tile,
- Figure 14: is a partially exploded perspective view of a solar collector according to the invention, to be installed in proximity to the ridge of a roof,
- Figure 15: is a different view thereof,
- Figure 16: is a partial perspective view of a complex formed from two channel tiles and one cover tile, used to form the solar collector,
- Figure 17: is a front view of the complex of Figure 16,
- Figure 18: is a perspective view of a cover tile element seen from above,
- Figure 19: is a perspective view thereof seen from below,
- Figure 20: is a partial longitudinal section through the end portion of a row of tile elements in proximity to the collector positioned on the roof ridge,
- Figure 21: is a side view thereof,
- Figure 22: is a perspective view from above showing a functional module applicable to the modular element of the invention,
- Figure 23: is a perspective view thereof seen from below,

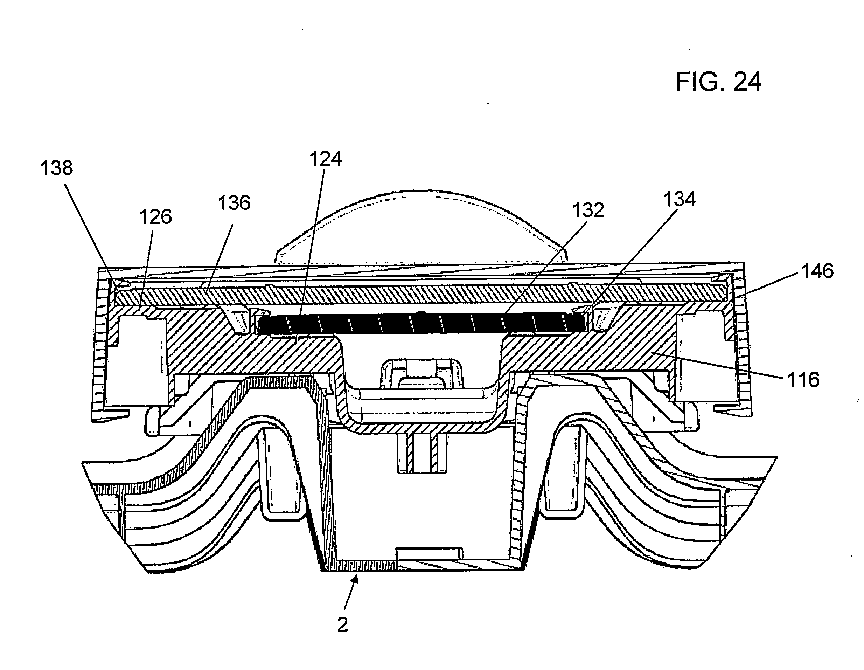

- Figure 24: is a cross-section through a first roof covering obtained with the multifunctional module,
- Figure 25: is a perspective view of a second roof covering,
- Figure 26: is a perspective view from above showing a first variant of a module,
- Figure 27: is a perspective view thereof from below,
- Figure 28: is a perspective view of the roof covering of Figure 24,
- Figure 29: is a perspective view from above showing a second variant of a module,
- Figure 30: is a perspective view thereof from below,
- Figure 31: is an exploded perspective view of an aerator insert/accessory,
- Figure 32: is a perspective view of an insert/accessory to be applied to the tile of Figure 29,
- Figure 33: shows it from below,
- Figure 34: is an exploded side view of a variant of a channel tile, and
- Figure 35: shows it from below.

As can be seen from the figures, the modular element consists of a channel tile 2 formed preferably of plastic material, aluminium, clay or fibre-cement and defining an upwardly open longitudinal cavity bounded by two raised side portions 4 provided with downwardly directed legs 6 lowerly bent outwards to form feet 8 for its fixing to a flat surface (not shown in the drawings).

More specifically, the feet 8 of those legs 6 positioned on one side of the channel tile 2 present a trapezoidal portion 10 engagable in a complementary trapezoidal cavity 12 provided in the feet 8 of those legs 6' positioned on the other side of the channel tile 2, to ensure mutual engagement between the channel tiles of adjacent rows. All the channel tiles 2 are then stabilized in their correct mutual position by providing all feet 8 with a hole 14 through which a screw or a similar fixing member can be passed simultaneously through the two superposed feet 8 of two adjacent channel tiles 2 to engage in the flat surface.

The transverse edge of the upper end of each channel tile 2 is provided with a rib 18 emerging from the upper surface of the tile and having the double function of forming a support for traditional channel tiles positioned partially superposed upwards to rest on that channel tile, and stop any water flow which might be urged to rise along the channel tile by the effect of the wind.

The two raised side portions 4 of the channel tile 2 are also provided with apertures 22 for engagement by special hook appendices described hereinafter.

The lower surface of the channel tile is provided, for stiffening the tile body, with longitudinal ribs 26 and transverse ribs 28, provided with apertures 30, 32 respectively.

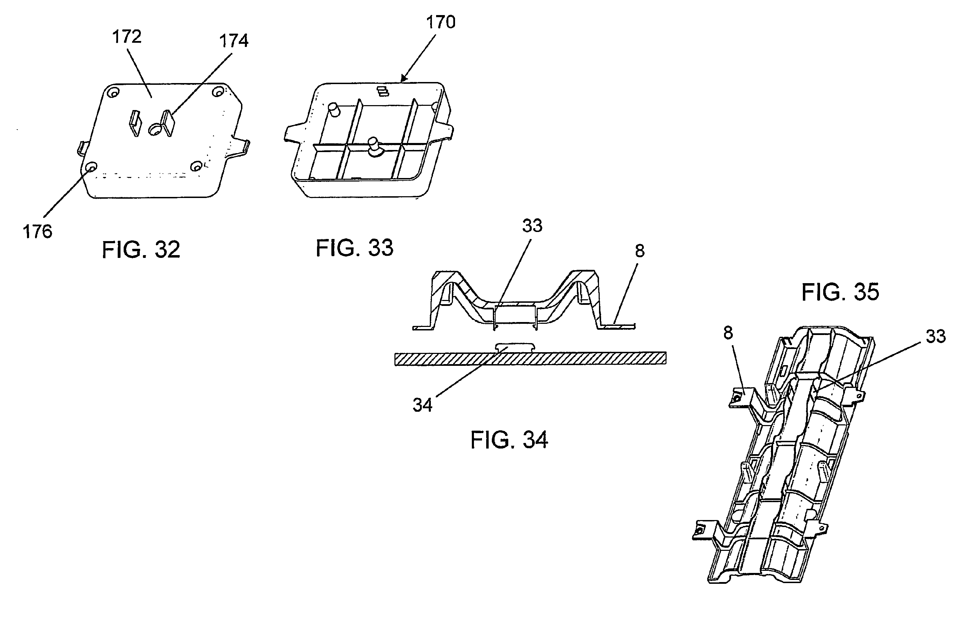

In a variant (see Figures 34 and 35) the lower surface of the tile is provided with coupling elements 33 cooperating with corresponding profiles 34 fixable to the roof.

At the raised side portions 4, the upper surface of the tile presents air intake ports 36 and positioning and centering elements 38 cooperating with appendices 40 for longitudinal alignment of the channel tiles.

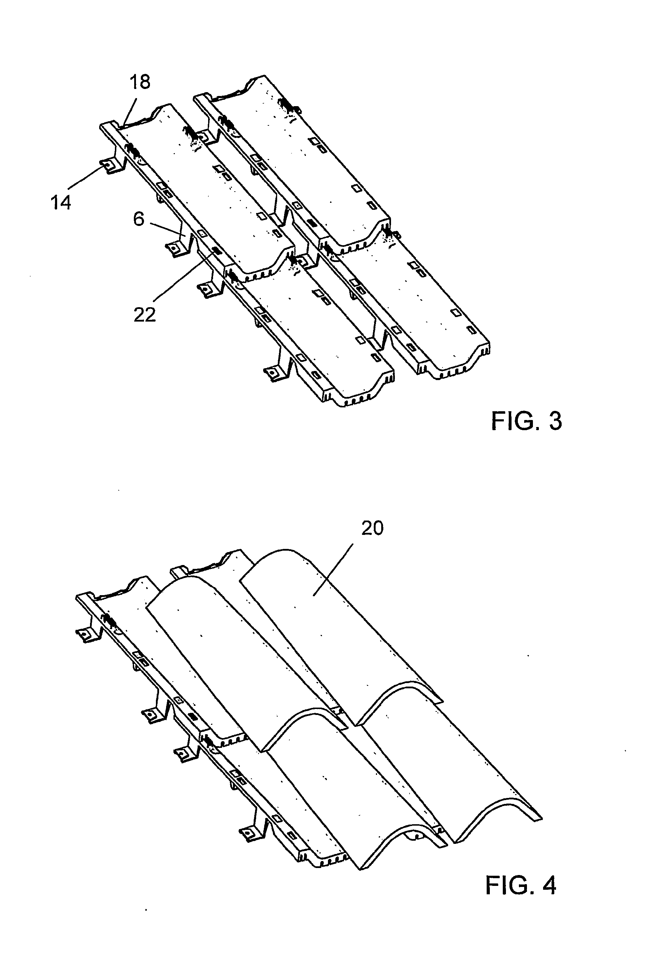

In this manner, during the initial roof construction, the channel tiles of the invention can be fixed to the roofing plane of the building and on these there can then be positioned traditional clay cover tiles 20 (see Figures 3 and 4). The clay cover tiles can subsequently be replaced by technological tiles, for example tiles provided with photovoltaic or thermal elements.

This enables a traditional roof to be transformed into a technological roof while avoiding laborious demolition work on the entire roof, as the transformation requires only replacement of the cover tiles.

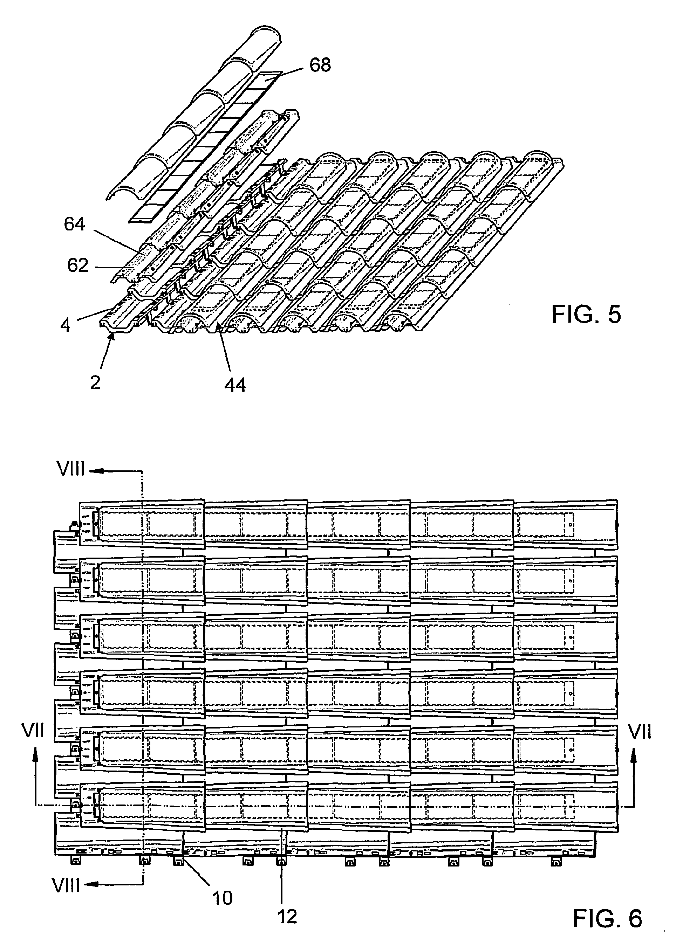

In the embodiment shown in Figures 5-13 a technological roof covering of photovoltaic effect is shown comprising channel tiles of the type now described and cover tiles 44.

Each cover tile 44 is fixed to the roofing plane by screws passing through appendices 50 projecting lowerly from the base 46, and is also fixed to the underlying pair of channel tiles 2 by coupling systems comprising elastic appendices 52 extending downwards from the lower surface of the cover tile 44 and snap-engaging in the corresponding apertures 22.

In addition, cover tiles pertaining to the same row can be preassembled by using profiles, fillets or extrusions and screws passing through the appendices 50; in this manner a series of cover tiles can be installed much more simply.

The base 46 of each cover tile 44 has an upwardly open longitudinal cavity presenting a slight frusto-conicity which on installation means that its narrower portion is disposed upperly and its wider portion is disposed lowerly. This frusto-conicity is also present in the entire cover tile 44, but is inverted in the sense that the narrower portion of this when installed is disposed upperly, while its wider portion is disposed lowerly. This enables each cover tile to be partially superposed on the underlying tile, to thus form the row of cover tiles, in which each tile is coupled to the adjacent tiles by appendices 56 and complementary apertures 58.

On that portion of each base 46 which is surmounted by the base 46 of the overlying cover tile, the base comprises a pair of projections 60, the purpose of which us to prevent any water which drips from the overlying cover tile being able to enter the longitudinal cavity of the base 46 of the underlying cover tile.

Given the "stepped" arrangement of the different cover tiles, the average line of slope of the row of channel tiles corresponds to the line of slope of the roofing plane but is slightly more inclined than the line of slope of each channel tile.

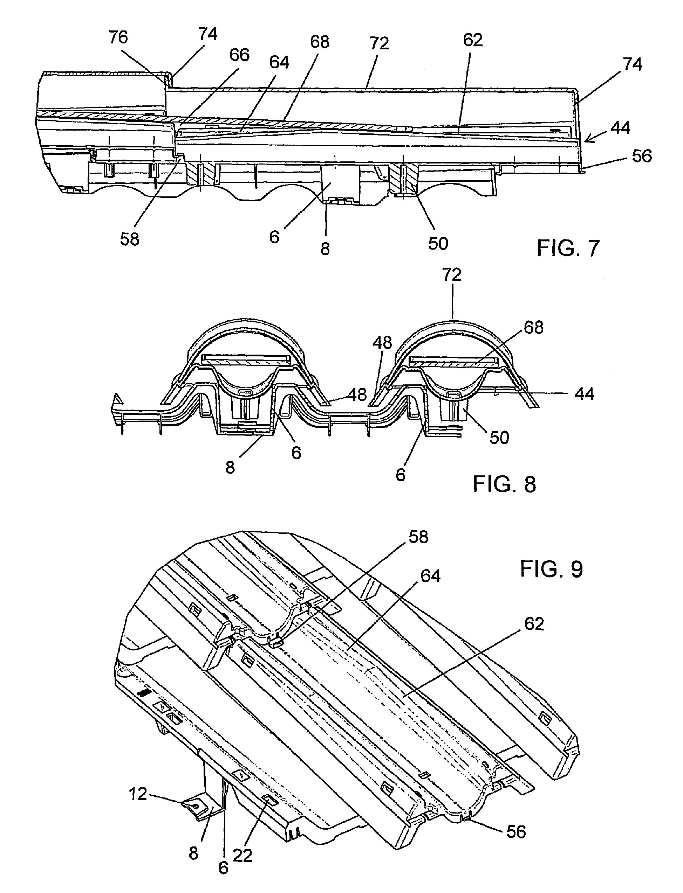

The longitudinal cavity of each base 46 of the cover tiles 44 is bounded laterally by two steps comprising an inclined lower portion 62 conforming to the average slope of the roofing and an upper portion 64 inclined in the opposite direction, such as to display a gap 66 of height less than the step which forms by the partial superposing of two adjacent cover tile bases 46 pertaining to the same row (see Figure 7).

The form of each base 46 and the dimensions of the parts involved in the partial superposing are such that the lower portions 62 of the steps of all said bases of cover tiles 44 pertaining to the same row are coplanar and form a support surface for a single photovoltaic panel 102 common to several cover tiles, and in particular to all cover tiles of the row.

In a variant (not shown in the drawings), the row presents alternate clay tiles and photovoltaic tiles, including different alternating arrangements.

The base 46 of each cover tile 44 is also provided with coupling appendices and complementary apertures, which together enable the bases of tiles pertaining to the same row to be temporarily fixed together before their final fixing to the roofing plane by screws applied to the bottom of the longitudinal cavity of each base 46 and passing through the appendices 50, which on installation are interposed between adjacent rows of channel tiles. As already stated, the fixing can be achieved by coupling elements, cooperating with corresponding profiles fixable to the roof.

The cover tiles 44 are also joined together at the superposed portions by using screws which pass through cavities 70 provided in each cover tile and aligned with corresponding holes provided in the surmounted tile, when the two tiles are partially superposed.

Each cover tile 44 also comprises an upper closure 72 formed of material transparent or partially transparent to solar radiation and secured to the underlying tile base 46 by traditional coupling systems.

Each transparent closure 72 has the shape of a frusto-conical sector and comprises two transversely extending end flanges 74, 76, of which the downstream flange 74 faces downwards, while the upstream flange 76 faces upwards to engage below the downstream flange 74 of the overlying transparent closure.

In particular applications the transparent closure 72 can also be lacking.

The photovoltaic panel 102, which as stated can be common to several cover tiles 44 or to the entire row of cover tiles, can then be connected electrically to the other panels by traditional methods, which do not in themselves form an aspect of the invention.

As best seen in Figure 8, the concave surface of the base 46 of the cover tiles 44 defines with the overlying photovoltaic panel 102 a longitudinal channel along which a flow of cooling air for the panel can circulate naturally.

The invention also comprises cover tiles of particular design, intended to connect a row of cover tiles of the invention to traditional clay cover tiles.

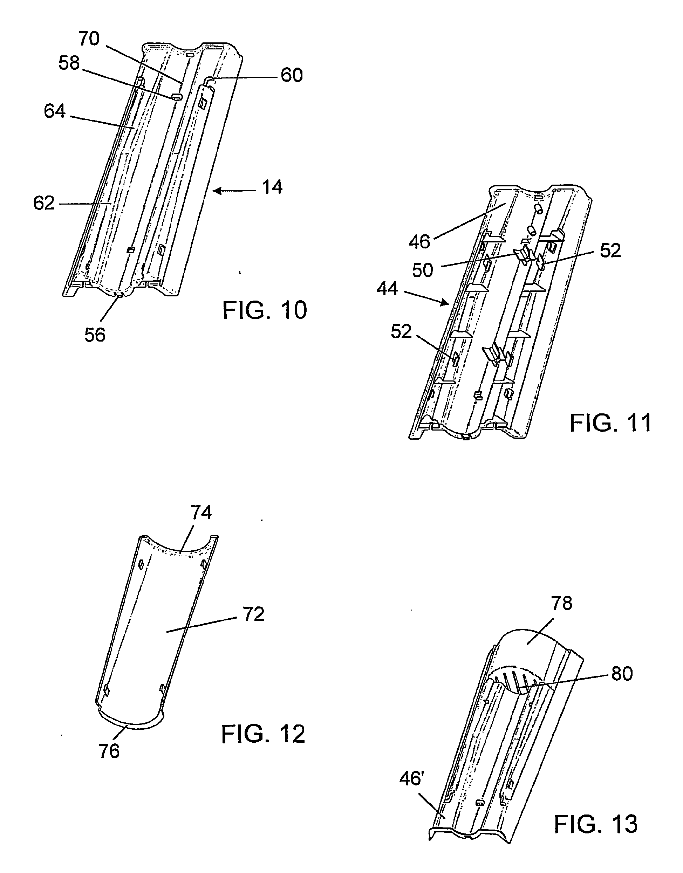

In this embodiment, shown in Figure 13, the narrowest part of the base 46', which in the drawing is shown lowerly, but in reality is disposed upperly, is of similar type to that of the preceding embodiment, with the remaining part 78 being without the longitudinal cavity and being convex to support below said part 78 a traditional curved tile of clay or other material. As in this case the vertical wall internally bounding this convex portion also forms the lower wall bounding the longitudinal ventilation channel of the photovoltaic panel 68, this is provided with a plurality of slots 80.

In another embodiment, not shown in the drawings, the lower portions 62 of the two steps of each base 46 of the cover tiles 44, i.e. those step portions intended to support the photovoltaic panel, are not made integral with said base 46, but are made as a separate element able to rotate about the longitudinal axis of the row of cover tiles.

For this purpose, an electric motor is associated with said separate elements to rotate the panel 102 such as to incline it to conform to the sun's position, to favour the conditions for irradiating the panel.

From the aforegoing it is apparent that the modular elements of the invention are particularly advantageous and in particular substantially reduce the number of connections between the photovoltaic panels compared with the number required in the case of individual panels for each tile, while enabling simpler control of the assembly.

Moreover, in the case of the rotary photovoltaic panels, these enable the light of the sun to be very easily followed compared with known solutions, and in particular enable this to be achieved within the tiles themselves, without modifying the external configuration of the roof.

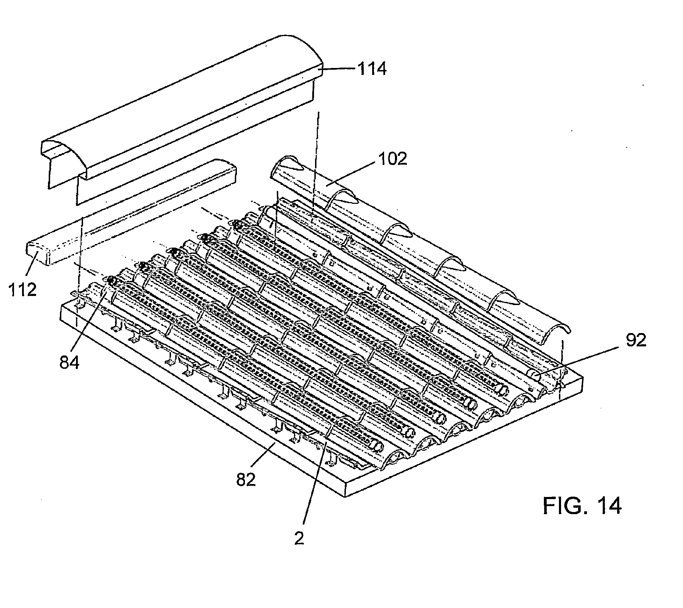

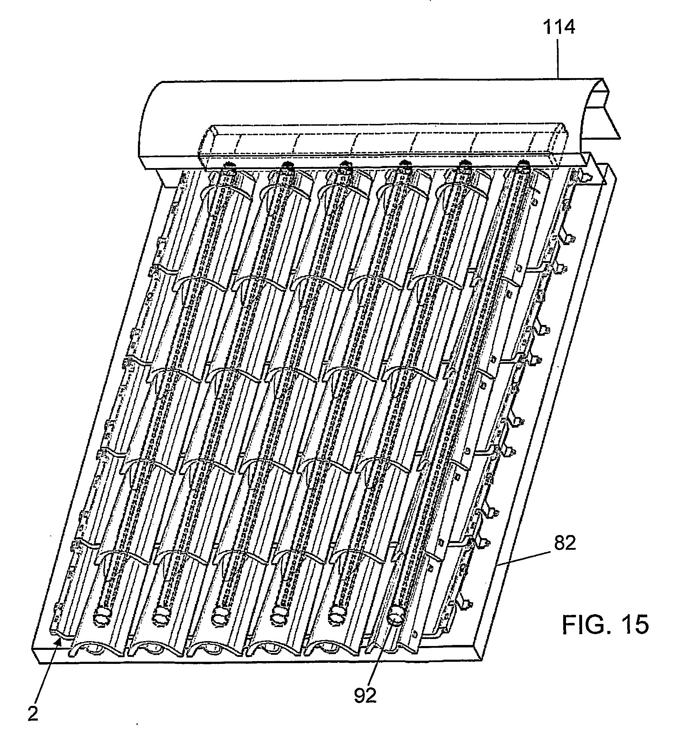

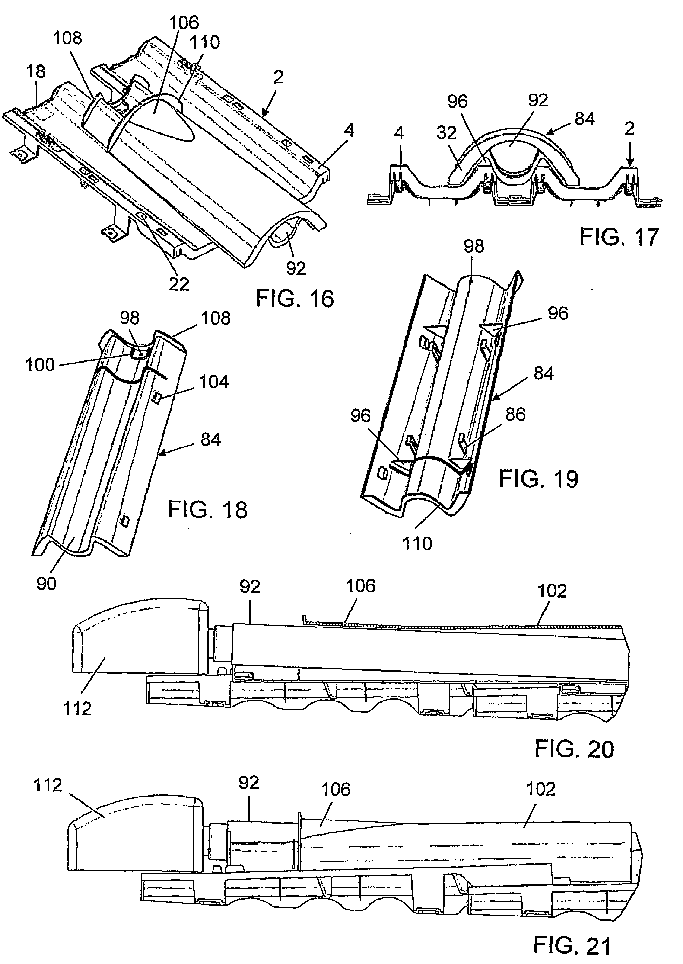

Figures 14-21 show a solar collector-type technological roof covering formed with the modular element of the invention, to be installed for example in proximity to the ridge of a roof.

The solar collector of the invention consists essentially of a modular panel comprising a layer of heat and sound insulating material 82, to which a plurality of curved or plain tile elements are applied and fitted together in the same manner as that heretofore described.

More specifically, the solar collector of this embodiment, which consists of roofing elements of curved tile type, comprises channel tiles 2 disposed with their concavity facing upwards, and cover tiles 84 disposed with their concavity facing downwards to straddle the channel tiles 2 of two adjacent rows and be stabilized with respect to these by the use of hook appendices in the apertures 22 provided in the raised side portions 4 of each channel tile 2.

The upper surface of the cover tile 84 comprises an upperly open longitudinal cavity 90 to form with the cavity of those cover tiles 84 pertaining to the same row a longitudinal channel to house a tubular capturing element 92 through which a thermovector fluid circulates in traditional manner.

The lower surface of the cover tile 84, and more precisely each of the two lower longitudinal cavities bounded by the tile sides and by the projection which forms the longitudinal channel 90 for receiving the capturing element 92, is provided with baffles 96 on which the cover tile 84 rests at the raised side portions 4 of the two adjacent channel tiles 2.

At the upper end of each cover tile 84 a hole 98 is provided for its fixing to the panel 82 by a fixing hook. This hole is surrounded by a wall 100 able to prevent any water, which rises along the channel 90 by the effect of the wind, from reaching the panel 82 by passing through the hole 98.

A cover element 102, made of a material transparent or partially transparent to the sun's rays (for example a plastic material), is applicable to each cover tile 84, which is preferably made of plastic material; it is provided on its lower surface with hooking appendices cooperating with corresponding apertures 104 provided in the outer longitudinal sides of the cover tile 84 to fix the cover element 102 to the tile.

Each cover element 102 is shaped as a frusto-conical sector and, in a manner similar to the transparent closure 72, comprises two transverse end flanges, of which the downstream flange faces downwards, while the upstream flange faces upwards to engage below the downstream flange of the overlying cover element 102.

The upper surface of the cover element 102 comprises an upwardly projecting cap 106 to house that portion of the capturing tubular element 92 which, because of its different inclination to the inclination of the cover element 102, projects beyond the surface thereof.

The length of the cover element 102 is less than the length of the cover tile 84 to which it is applied, such that the upper end of the cover tile 84 projects upperly relative to the cover element 102 by a portion intended for superposing between adjacent cover tiles 84 pertaining to the same row.

The superposed portion of the upper cover tile 84 is supported lowerly by a transverse rib 108 projecting upwards from the underlying cover tile 84. The cover tile rests with the lower edge of its transverse rib 110 on the upper surface of said underlying cover element.

In the illustrated embodiment, the capturing element 92 housed in the longitudinal channel 90 of the cover tiles 84 serves for all the tiles pertaining to the same row and is preferably of heat pipe type, comprising an outer covering in which vacuum is applied, and an inner tube filled with a thermovector fluid of low boiling point.

As the capturing element 92 is disposed inclined, in its bottom the thermovector fluid is liquid whereas in its top it is in the vapour state following evaporation caused by the solar heating.

The upper end of the inner tube is preferably dry-connected to a header 112, extending within the roof ridge profile 114, which is common to all the capturing elements 92 of the two pitches which join together at that ridge.

Through the header 112 there circulates a mixture of water and glycol which by forced circulation reaches a heat exchanger (not shown), to which the header 112 and a coil of the user circuit are connected.

In contrast to the illustrated embodiment, the header can also be disposed below the panel 82 or itself form the roof ridge, and the individual capturing elements can be normal tubes connected together in traditional manner instead of comprising the heat pipe system, and that independently thereof individual capturing elements can be provided for each cover tile 84.

Moreover the channel tiles 4 and cover tiles 84, instead of being fixed to a heat and sound insulating panel 82, with which they form a single modular unit, can be directly applied to a roof covering or possibly to a panel of different type.

The solar collector obtained with the modular element of the invention is particularly advantageous compared with traditional solar collectors, essentially in that they present an outer appearance identical to that of traditional roofs formed from curved or plain tiles.

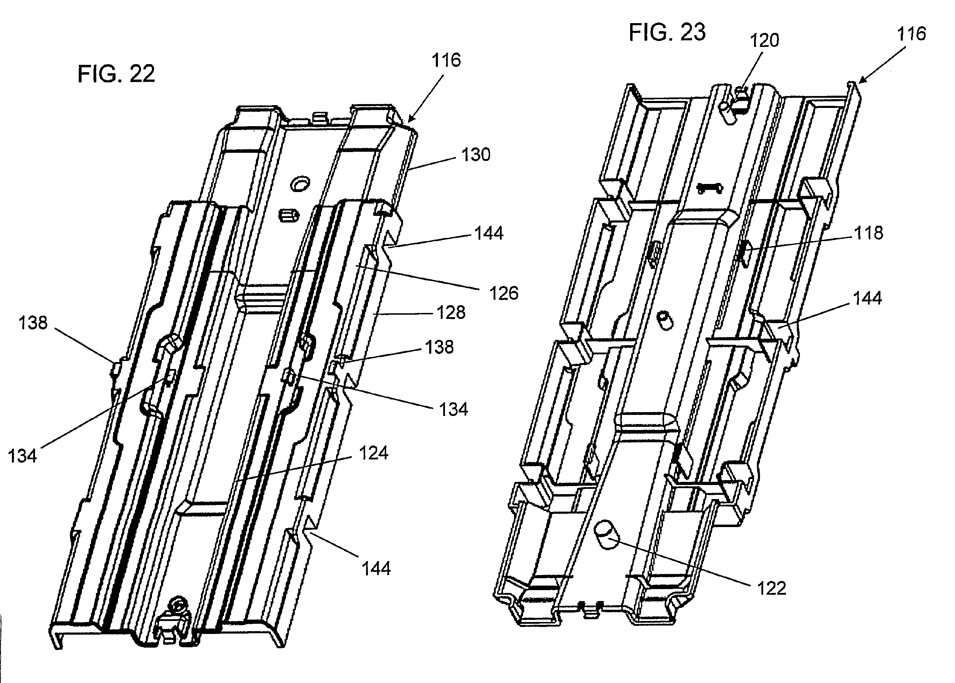

Another element applicable to the modular element of the invention consists of a multifunctional module, indicated overall by 116 and defined in this manner as it is able to receive different components for performing different functions (see Figures 22-23).

In its general configuration it presents a profiled shape displaying a downward overall concavity, in order to be able to simultaneously embrace adjacent channel tiles 2 disposed in two side-by-side rows. For this purpose the multifunctional module, preferably made of the same plastic material as the channel tile, is provided on its lower surface with two pairs of hook appendices 118. snap-insertable into apertures 22 of the channel tile. The various parts are disposed and dimensioned such that when the channel tiles are fixed to the underlying covering in partially superposed condition, each module can insert those hooks 118 disposed along one line into the two apertures 22 of two superposed channel tiles 2 pertaining to one row, and can insert those hooks 118 disposed along the other line into the two apertures of the two superposed channel tiles pertaining to the other row.

To further enable exact positioning of the different multifunctional modules of each row in partially superposed condition, each multifunctional module is provided along the longitudinal centre line with two downwardly facing and lowerly closed hollow appendices, one 120 of smaller diameter and one 122 of larger diameter, to receive the appendix 120 of the superposed upstream module.

In order to stabilize the multifunctional modules not only against the channel tiles but also indirectly against the roofing plane, screws are used passing through the two already mutually engaged appendices 120 and 122 and through the interspace defined by adjacent rows of channel tiles, before being directly engaged with said roofing plane.

To prevent the possibility of any water infiltration through the hole traversed by each screw, the appendix 120 is preferably prolonged upwards with its edge beyond the upper surface of the module 116, with the screw head being appropriately covered by a suitable sealant, or by using an O-ring positioned below the head of the fixing screw.

The upper surface of the module 116 has a longitudinal cavity bounded by a first pair of internal parallel steps 124, positioned at a lower level and closer together, and a second pair of external parallel steps 126, positioned at a higher level and further apart.

The overall shape of the module 116 comprises a greater length portion 128 extending at a certain level, and a smaller length portion 130 extending at a lower level, to enable continuity to be achieved between the portions 128 on superposing the two modules.

The internal steps 124 are intended to support a photovoltaic panel 132, which can be individual for each module or be common to several modules. In either case it is snap-fitted into its seat by a pair of appendices 134 emerging from the module 116 external to the two steps 124.

The external steps 126 are intended to support a photovoltaic panel 136, which can again be individual to each module or be common to several modules and is snap-fitted into its seat by a pair of appendices 138.

Narrower photovoltaic panels 132 or wider photovoltaic panels 136 can be used according to requirements, with the steps 124 or the steps 126 being correspondingly used.

The various panels 132, 136 are retained in their seat against possible longitudinal displacement by brackets 140, which are snap-fitted by hook appendices 142 engaging in corresponding seats 144 provided (possibly at predetermined constant distances apart) along the edges of the module 116 to support the ends of the panels 132, 136.

The brackets are partly superposed on the ends of the panels 132, 136 and partly rest with a downwardly facing edge on the end edge of the panel.

For this purpose this downwardly facing edge has to project to a suitable extent to also enable the narrower panels to rest, these being positioned at a lower level.

To hide the photovoltaic panels 132, 136 from view if required, a partially transparent and preferably coloured profile 146 of plastic material is used, to be coupled to said modules 116.

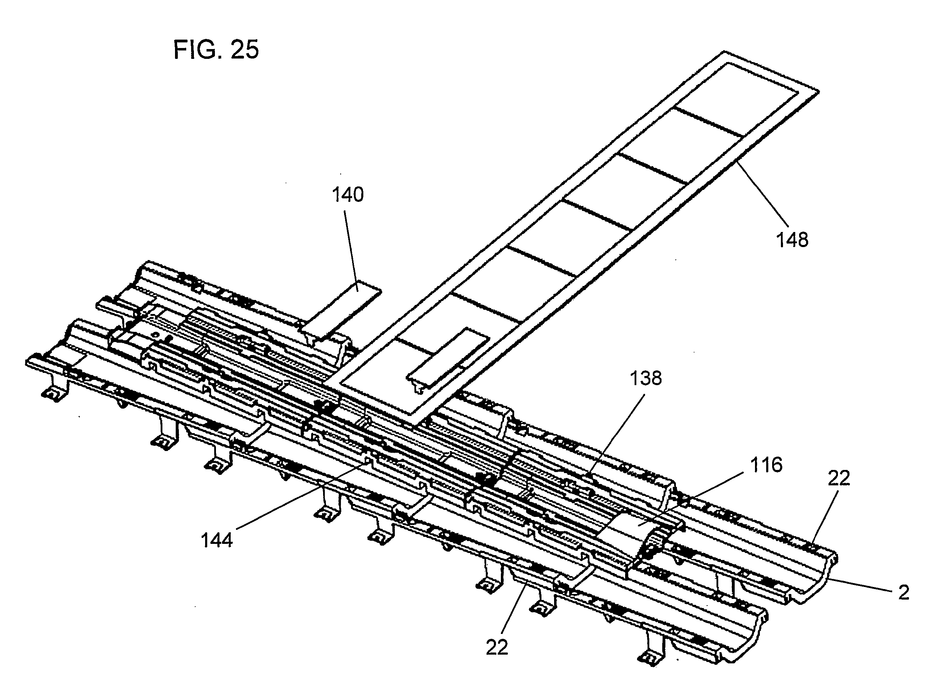

Instead of applying narrow longitudinal photovoltaic panels 132 or wide longitudinal photovoltaic panels 136, transverse photovoltaic panels 148 can be applied (see Figure 25), these resting on steps 126 of several side-by-side modules and being stabilized longitudinally by the appendices of only the external modules, on which the panel 148 rests, and transversely by brackets 140, similar to those which stabilize the wider longitudinal panels 136 and, in a like manner, coupled by the appendices 142 and the seats 144. In this case the application of the panel 148 must be preceded by removal of the appendices 138 which could interfere with the positioned panel.

In addition to the standard form of the module 116, the invention also provides a further two variants to be used in particular situations.

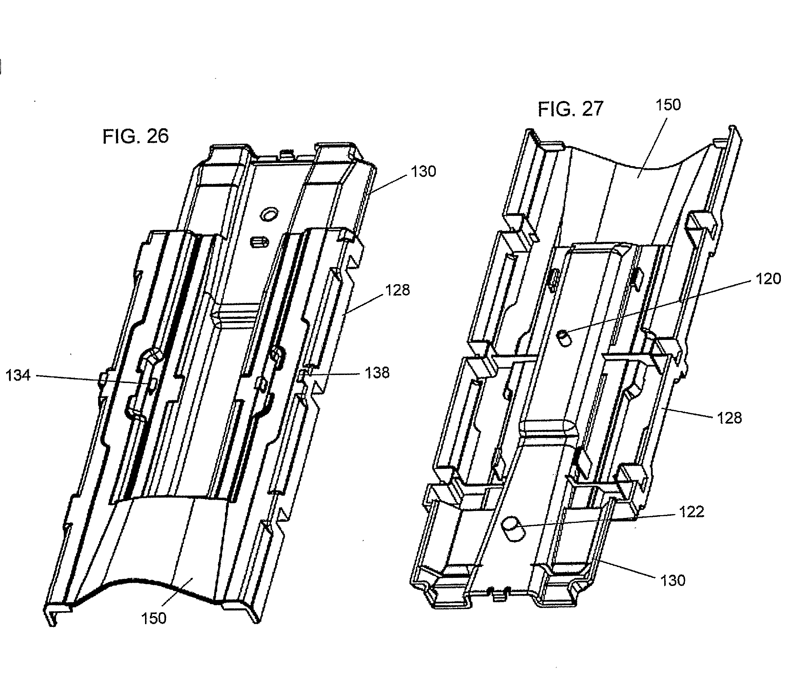

In one of these variants, shown in Figures 26 and 27, that end of the portion 128 opposite the end to which the lower portion 130 is joined is in the shape of an arch 150. On installation this is positioned downstream and enables the row of modules to be continued with traditional curved cover tiles 20 made of clay or of plastic material.

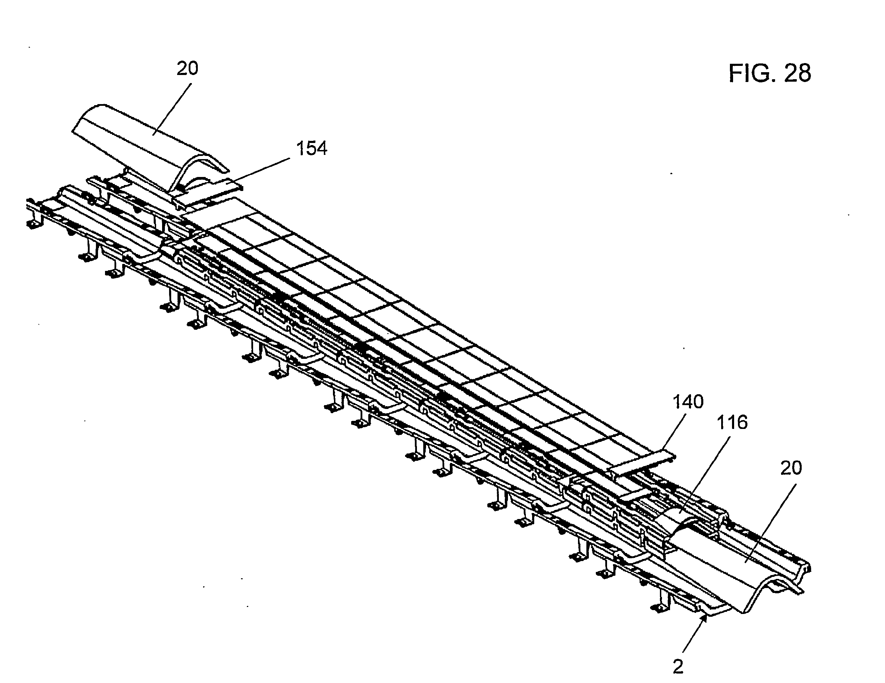

Furthermore, the traditional cover tiles 20 can proceed upstream of the row of standard modules 116 and rest on a bracket 154, which in contrast to the bracket 140 presents an edge comprising an arched projection on which the tile 20 rests and which closes its end (see Figure 28).

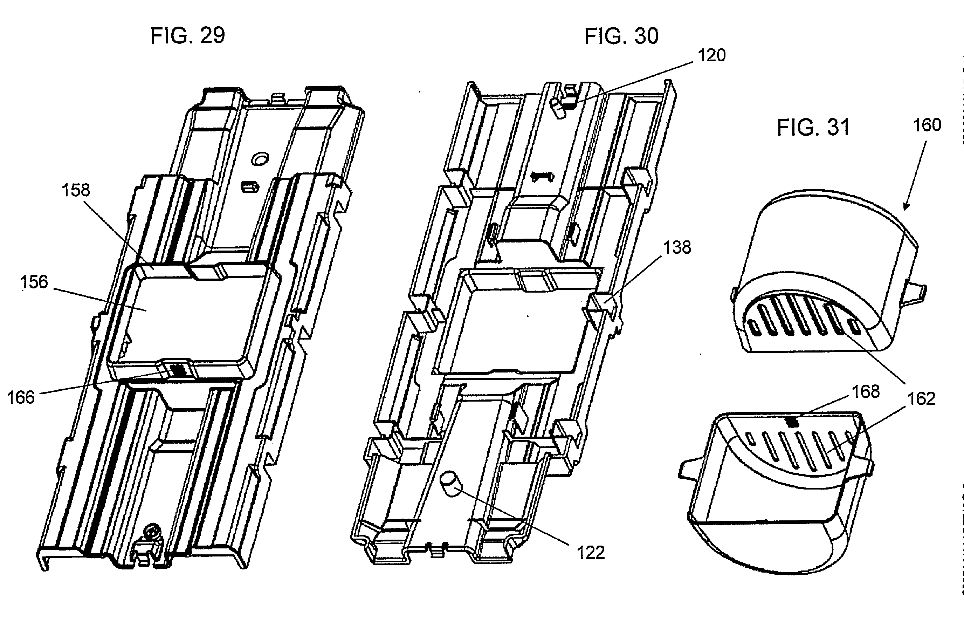

The second variant of the standard module is shown in Figures 29 and 30. The body of the module comprises an aperture 156 bounded by a raised perimetral edge 158. Its function is to form a discontinuity in the module for passage of a support pole for electrical or electronic equipment or for the passage of electric cables of any kind.

The same aperture also enables application of an aerator 160 provided with ventilation slots 162 in that side facing downstream.

To mount the aerator 160 on the aperture 156, two side tabs 164 provided on the aerator are engaged in the appendices 138 which fix the photovoltaic panels 136.

The opposing sides of the edge 150 are externally provided with multiple toothing 166, cooperating with similar multiple toothing 168 on the inside of two opposite walls of the aerator.

As an alternative to the aerator 160, a different accessory 170 (see Figures 32 and 33) can be mounted comprising the same system for its mechanical fixing to the element as in Figures 29-30, but presenting an upper surface 172 preferably parallel to the roof slope, and mechanical fixing elements 174 which enable snap-fitting of those aluminium or plastic profiles usually used for fixing to the roof those classical photovoltaic panels presenting perimetral aluminium surrounds. In this manner traditional photovoltaic systems can be installed without necessarily having to carry out further fixing work; in this respect, this accessory can be fixed to the multifunctional module to further fix the entire assembly to the roof with the aid of fixing screws insertable through holes 176. The profiles to be mounted can be either parallel to the direction of the rows of tiles or perpendicular to them, depending on the type of fixing accessory used.

## Claims

1. Modular elements for roofs of buildings, comprising curved channel tiles (2), disposed in use in partially superposed mutually predefined position on the roof support surface, such as to form side by side rows extending substantially along the lines of maximum roof slope with their concavity facing upwards, and curved cover tiles (20, 44, 84) disposed in use with their concavity facing downwards in partially superposed condition to form rows straddling pairs of side by side rows of channel tiles, each channel tile (2) presenting the following characteristics:
- it has an upwardly open longitudinal cavity bounded by two raised side portions (4),
- said raised portions (4) are provided with downwardly facing legs (6),
- its upstream transverse edge is provided with a rib (18) on which the overlying channel tile pertaining to the same row rests,
- when secured to a channel tile of the adjacent row it forms a support for a traditional cover tile or, at choice, for a technological tile disposed straddling said channel tiles, **characterised in that** said legs (6) are provided lowerly with feet (8) fixable to the feet of a side by side channel tile and, simultaneously therewith, to an underlying roofing plane.

2. Modular elements as claimed in claim 1, **characterised in that** the channel tiles (2) present, at the raised portions (4), air intake ports (36) and positioning and centering elements (38) cooperating with appendices (40) for longitudinal alignment of the channel tiles.

3. Modular elements as claimed in claim 1, **characterised in that**:
- the feet (8) of the legs (6) positioned on one side of each channel tile (2) present a portion of shape complementary to the shape of the feet (8) of the legs (6) positioned on the other side of the channel tile, when said feet are in the superposed state for fixing the tile to the underlying roofing plane,
- the feet (8) are provided with a hole (14) disposed such that when the complementary portions of said feet pertaining to adjacent channel tiles are superposed, the holes are mutually aligned,
- the raised side portions (4) of each channel tile (2) are provided with apertures (22) engagable by hook appendices (60) projecting from the lower surface of each cover tile (20, 44, 84).

4. Modular elements as claimed in claim 1, **characterised in that** the channel tiles (2) and the cover tiles (44) comprise photovoltaic elements (68) in their interior, each cover tile (44) being provided in its downstream portion with at least one pair of coplanar longitudinal steps (62), inclined in accordance with the average inclination of the row of cover tiles, and presenting in its upstream portion a gap (66) of such height as to enable correct surmounting by the upstream cover tile, which when superposed does not allow its top to pass beyond the plane which is defined by said longitudinal steps (62) of several adjacent tiles pertaining to the same row and which forms a support for a single panel of photovoltaic elements (68), common to several adjacent tiles.

5. Modular elements as claimed in claim 4, **characterised in that** each cover tile (44) is provided with a closure element (72) made of at least partly transparent material.

6. Modular elements as claimed in claim 5, **characterised in that** each closure element (72) is curved transversely to conform to the transverse curvature of the cover tile (44) and presents at its downstream transverse edge a downwardly facing flange (74) engaging an upwardly facing flange (76) provided on the upstream transverse edge of the transparent closure element surmounted by the adjacent element.

7. Modular elements as claimed in claim 1, **characterised in that** the cover tile (84) is closed upperly by a cover element (102) at least partly transparent to solar radiation and defining with the cover tile (84) a seat for a capturing element (92) through which a thermovector fluid can circulate.

8. Modular elements as claimed in claim 1, **characterised in that** the lower surface of each cover tile (84) is provided with transverse baffles (96) on which said cover tile (84) rests at the raised side portions (4) of two underlying adjacent channel tiles (2).

9. Modular elements as claimed in claim 7, **characterised by** comprising individual capturing elements (92) for each cover tile (84).

10. Modular elements as claimed in claim 7, **characterised by** comprising a heat and sound insulating panel (82) to which said elements (2, 20, 44, 84) are applied.

11. Modular elements as claimed in claim 7, **characterised in that** said capturing elements (92) are connected to a header (112,114).

12. Modular elements as claimed in claim 1, **characterised by** also comprising a multifunctional module (116) embracing two underlying channel tiles (2) fixed to the roofing plane and arranged to receive, resting thereon, a technological cover tile, and in that said multifunctional module (116) presents a downwardly facing overall concavity embracing two channel tiles, to which it is snap-fitted by hook appendices (118).

13. Modular elements as claimed in claim 12, **characterised in that** said multifunctional module (116) is provided on its upper side with a pair of steps (124, 126) on which a photovoltaic panel (132, 136) rests.

14. Modular elements as claimed in claim 12, **characterised in that** said multifunctional module (116) comprises a greater length portion (128) and a smaller length portion (130) extending at a lower level and supporting the end part of the greater length portion (128) of the adjacent module, which rests thereon, to hence create surface continuity between the greater length portions (128) of several modules (116).

15. Modular elements as claimed in claim 13, **characterised in that** each multifunctional module (116):
- is provided with elastic appendices (134, 138) associated with said pair of steps (124, 126) and intended for snap-fitting said photovoltaic panel (132, 136),
- comprises brackets (140) which hookingly engage the longitudinal edges of the module to secure said photovoltaic panel (132, 136),
- comprises two pairs of steps (1124, 126) positioned at different distances and on different levels to support photovoltaic panels (132, 136) of different widths.

## Patentansprüche

1. Modulare Elemente für Gebäudedächer, umfassend gebogene Rinnenziegel (2), die im Gebrauch in einer teilweise überlagerten, gegenseitig vordefinierten Position auf der Dachtragfläche angeordnet sind, um nebeneinanderliegende Reihen zu bilden, die sich im Wesentlichen an den Linien der maximalen Dachneigung entlang erstrecken, wobei ihre Rundhöhlung nach oben weist, und gebogene Deckziegeln (20, 44, 84), die im Gebrauch mit ihrer Rundhöhlung nach unten weisend in einem teilweise überlagerten Zustand angeordnet sind, um Reihen zu bilden, die Paare von nebeneinanderliegenden Reihen von Rinnenziegeln überbrücken, wobei jeder Rinnenziegel (2) die folgenden Kennzeichen aufweist:
- er weist eine nach oben offene Längsaushöhlung auf, die durch zwei angehobene Seitenabschnitte (4) begrenzt ist,
- die angehobenen Abschnitte (4) sind mit nach unten gerichteten Beinen (6) versehen,
- sein vorgelagerter Querrand ist mit einer Rippe (18) versehen, auf welcher der überlappende Rinnenziegel aufliegt, der zu der gleichen Reihe gehört,
- wenn er an einem Rinnenziegel der angrenzenden Reihe fixiert ist, bildet er eine Unterlage für einen herkömmlichen Abdeckziegel oder wahlweise für einen technologischen Ziegel, der die Rinnenziegel überbrückend angeordnet ist, **dadurch gekennzeichnet, dass** die Beine (6) unten mit Füßen (8) versehen sind, die an den Füßen einer Seite durch einen Seitenrinnenziegel und gleichzeitig damit an eine darunterliegende Dachebene befestigt werden können.

2. Modulare Elemente nach Anspruch 1, **dadurch gekennzeichnet, dass** die Rinnenziegel (2) an den angehobenen Abschnitten (4), Lufteinlassstutzen (36) und Positionier- und Zentrierelemente (38), die mit Ansätzen (40) für eine Längsausrichtung der Rinnenziegel zusammenwirken, aufweisen.

3. Modulare Elemente nach Anspruch 1, **dadurch gekennzeichnet, dass**:
- die Füße (8) der Beine (6), die auf einer Seite jedes Rinnenziegels (2) positioniert sind, einen Abschnitt mit einer Form aufweisen, welche die Form der Füße (8) der Beine (6) ergänzt, die auf der anderen Seite des Rinnenziegels positioniert sind, wenn die Füße sich in dem überlagerten Zustand befinden, um den Ziegel an der darunterliegenden Dachebene zu befestigen,
- die Füße (8) mit einem Loch (14) versehen sind, das derart angeordnet ist, dass, wenn sich die ergänzenden Abschnitte der Füße, die zu angrenzenden Rinnenziegeln gehören, überlagern, die Löcher aufeinander ausgerichtet sind,
- die angehobenen Seitenabschnitte (4) jedes Rinnenziegels (2) mit Öffnungen (22) versehen sind, in die Hakenansätze (60) eingreifen können, die aus der unteren Oberfläche jedes Dachziegels (20, 44, 84) hervorragen.

4. Modulare Elemente nach Anspruch 1, **dadurch gekennzeichnet, dass** die Rinnenziegel (2) und die Abdeckziegel (44) Photovoltaik-Elemente (68) in ihrem Innern umfassen, wobei jeder Abdeckziegel (44) in seinem nachgelagerten Abschnitt mit mindestens einem Paar koplanarer Längsstufen (62) versehen ist, die gemäß der durchschnittlichen Neigung der Reihe von Abdeckziegeln geneigt sind, und in seinem vorgelagerten Abschnitt einen Zwischenraum (66) einer derartigen Höhe aufweist, dass ein richtiges Überhöhen durch den vorgelagerten Abdeckziegel ermöglicht wird, der, wenn er überlagert wird, seinen oberen Teil nicht über die Ebene hinausgehen lässt, die durch die Längsstufen (62) mehrerer angrenzender Ziegel definiert wird, die zu der gleichen Reihe gehören, und die eine Unterlage für ein einzelnes Feld von Photovoltaik-Elementen (68), das mehreren angrenzenden Ziegeln gemeinsam ist, bildet.

5. Modulare Elemente nach Anspruch 4, **dadurch gekennzeichnet, dass** jeder Abdeckziegel (44) mit einem Verschlusselement (72) versehen ist, das aus einem mindestens teilweise transparenten Material hergestellt wird.

6. Modulare Elemente nach Anspruch 5, **dadurch gekennzeichnet, dass** jedes Verschlusselement (72) quer gebogen ist, um sich der Querbiegung des Abdeckziegels (44) anzupassen, und an seinem nachgelagerten Querrand einen nach unten weisenden Flansch (74) aufweist, der in einen nach oben weisenden Flansch (76) eingreift, der auf dem vorgelagerten Querrand des transparenten Verschlusselements bereitgestellt wird, das durch das angrenzende Element überhöht wird.

7. Modulare Elemente nach Anspruch 1, **dadurch gekennzeichnet, dass** der Abdeckziegel (84) oben durch ein Abdeckelement (102) verschlossen wird, das mindestens teilweise für Sonnenstrahlung transparent ist und mit dem Abdeckziegel (84) eine Auflage für ein Auffangelement (92) definiert, durch das ein wärmeleitendes Fluid umlaufen kann.

8. Modulare Elemente nach Anspruch 1, **dadurch gekennzeichnet, dass** die untere Oberfläche jedes Abdeckziegels (84) mit Querablenkplatten (96) versehen ist, auf denen der Abdeckziegel (84) an den angehobenen Seitenabschnitten (4) von zwei darunterliegenden angrenzenden Rinnenziegeln (2) aufliegt.

9. Modulare Elemente nach Anspruch 7, **dadurch gekennzeichnet, dass** sie einzelne Auffangelemente (92) für jeden Abdeckziegel (84) umfassen.

10. Modulare Elemente nach Anspruch 7, **dadurch gekennzeichnet, dass** sie ein wärme- und schallisolierendes Feld (82) umfassen, an dem die Elemente (2, 20, 44, 84) angebracht sind.

11. Modulare Elemente nach Anspruch 7, **dadurch gekennzeichnet, dass** die Auffangelemente (92) mit einem Kopfstück (112, 114) verbunden sind.

12. Modulare Elemente nach Anspruch 1, **dadurch gekennzeichnet, dass** sie auch ein Multifunktionsmodul (116) umfassen, das zwei darunterliegende Rinnenziegel (2) umgreift, die an der Dachebene befestigt sind, und dazu angeordnet ist, um daraufliegend einen technologischen Abdeckziegel aufzunehmen, und dass das Multifunktionsmodul (116) eine nach unten weisende Gesamtaushöhlung aufweist, die zwei Rinnenziegel umgreift, in die es durch Hakenansätze (118) einrastet.

13. Modulare Elemente nach Anspruch 12, **dadurch gekennzeichnet, dass** das Multifunktionsmodul (116) auf seiner oberen Seite mit einem Paar Stufen (124, 126) versehen ist, auf denen ein Photovoltaikfeld (132, 136) aufliegt.

14. Modulare Elemente nach Anspruch 12, **dadurch gekennzeichnet, dass** das Multifunktionsmodul (116) einen längeren Abschnitt (128) und einen kürzeren Abschnitt (130) umfasst, der sich auf einem unteren Niveau erstreckt und den Endteil des längeren Abschnitts (128) des angrenzenden Moduls trägt, der darauf aufliegt, um somit eine Oberflächenkontinuität zwischen den längeren Abschnitten (128) mehrerer Module (116) zu schaffen.

15. Modulare Elemente nach Anspruch 13, **dadurch gekennzeichnet, dass** jedes Multifunktionsmodul (116):
- mit elastischen Ansätzen (134, 138) versehen ist, die mit dem Paar Stufen (124, 126) verknüpft sind und dazu gedacht sind, in das Photovoltaikfeld (132, 136) einzurasten,
- Träger (140) umfasst, die verhakend in die Längsränder des Moduls eingreifen, um das Photovoltaikfeld (132, 136) zu fixieren,
- zwei Paar Stufen (1124, 126) umfasst, die in verschiedenen Abständen und auf verschiedenen Niveaus positioniert sind, um Photovoltaikfelder (132, 136) unterschiedlicher Breite zu tragen.

## Revendications

1. Eléments modulaires pour toits de bâtiments, comprenant des tuiles canal incurvées (2), disposées en service selon une position prédéfinie de façon mutuellement et partiellement superposée sur la surface de support de toit, de manière à former des rangées juxtaposées s'étendant sensiblement le long des lignes de la pente de toit maximale avec leur côté concave orienté vers le haut, et des tuiles de couverture incurvées (20, 44, 84) disposées en service avec leur côté concave orienté vers le bas dans une condition partiellement superposée pour former des rangées chevauchant les paires de rangées de tuiles canal juxtaposées, chaque tuile canal (2) présentant les caractéristiques suivantes :
- elle possède une cavité longitudinale ouverte vers le haut limitée par deux parties latérales surélevées (4),
- lesdites parties surélevées (4) sont munies de pattes orientées vers le bas (6),
- son bord transversal en amont est muni d'une nervure (18) sur laquelle repose la tuile canal sous-jacente faisant partie de la même rangée,
- quand elle est fixée à une tuile canal de la rangée adjacente, elle forme un support pour une tuile de couverture classique ou, au choix, pour une tuile technologique disposée de manière à chevaucher lesdites tuiles canal,
**caractérisés en ce que** lesdites pattes (6) sont munies plus bas de pieds (8) pouvant être fixés aux pieds d'une tuile canal juxtaposée et, simultanément à ceux-ci, à un plan de toiture sous-jacent.

2. Eléments modulaires selon la revendication 1, **caractérisés en ce que** les tuiles canal (2) présentent, au niveau des parties surélevées (4), des orifices d'entrée d'air (36) et des éléments de positionnement et de centrage (38) coopérant avec les appendices (40) pour l'alignement longitudinal des tuiles canal.

3. Eléments modulaires selon la revendication 1, **caractérisés en ce que** :
- les pieds (8) des pattes (6) positionnés d'un côté de chaque tuile canal (2) présentent une partie de forme complémentaire à la forme des pieds (8) des pattes (6) positionnés de l'autre côté de la tuile canal, lorsque lesdits pieds sont dans l'état superposé pour fixer la tuile au plan de toiture sous-jacent,
- les pieds (8) sont munis d'un trou (14) disposé de telle sorte que lorsque les parties complémentaires desdits pieds faisant partie des tuiles canal adjacentes sont superposées, les trous sont alignés mutuellement,
- les parties latérales surélevées (4) de chaque tuile canal (2) sont munies d'ouvertures (22) pouvant être mises en prises avec des appendices en crochets (60) faisant saillie à partir de la surface inférieure de chaque tuile de couverture (20, 44, 84).

4. Eléments modulaires selon la revendication 1, **caractérisés en ce que** les tuiles canal (2) et les tuiles de couverture (44) comprennent des éléments photovoltaïques (68) à l'intérieur de celles-ci, chaque tuile de couverture (44) étant munie dans sa partie en aval d'au moins une paire de gradins longitudinaux coplanaires (62), inclinés selon l'inclinaison moyenne de la rangée de tuiles de couverture, et présentant dans sa partie en amont un jeu (66) d'une hauteur de nature à permettre un chevauchement correct par la tuile de couverture en amont, qui lorsqu'elle est superposée ne permet pas à sa partie supérieure de passer au-delà du plan qui est défini par lesdits gradins longitudinaux (62) de plusieurs tuiles adjacentes faisant partie de la même rangée et qui forme un support pour un seul panneau d'éléments photovoltaïques (68), commun à plusieurs tuiles adjacentes.

5. Eléments modulaires selon la revendication 4, **caractérisés en ce que** chaque tuile de couverture (44) est munie d'un élément de fermeture (72) réalisé à partir d'un matériau au moins partiellement transparent.

6. Eléments modulaires selon la revendication 5, **caractérisés en ce que** chaque élément de fermeture (72) est incurvé transversalement pour se conformer à la courbure transversale de la tuile de couverture (44) et présente au niveau de son bord transversal en aval un rebord orienté vers le bas (74) se mettant en prise avec un rebord orienté vers le haut (76) prévu sur le bord transversal en amont de l'élément de fermeture transparent surmonté par l'élément adjacent.

7. Eléments modulaires selon la revendication 1, **caractérisés en ce que** la tuile de couverture (84) est fermée sur la partie supérieure par un élément de couverture (102) au moins partiellement transparent au rayonnement solaire et définissant avec la tuile de couverture (84) une assise pour un élément de capture (92) à travers lequel peut circuler un fluide thermovecteur.

8. Eléments modulaires selon la revendication 1, **caractérisés en ce que** la surface inférieure de chaque tuile de couverture (84) est munie de chicanes transversales (96) sur lesquelles repose ladite tuile de couverture (84) au niveau des parties latérales surélevées (4) des deux tuiles canal adjacentes sous-jacentes (2).

9. Eléments modulaires selon la revendication 7, **caractérisés en ce qu'**ils comprennent des éléments de capture individuels (92), pour chaque tuile de couverture (84).

10. Eléments modulaires selon la revendication 7, **caractérisés en ce qu'**ils comprennent un panneau isolant thermique et phonique (82) sur lequel sont appliqués lesdits éléments (2, 20, 44, 84).

11. Eléments modulaires selon la revendication 7, **caractérisés en ce que** lesdits éléments de capture (92) sont reliés à un collecteur (112, 114).

12. Eléments modulaires selon la revendication 1, **caractérisés en ce qu'**ils comprennent également un module multifonctionnel (116) couvrant deux tuiles canal sous-jacentes (2) fixées au plan de toiture et agencé pour recevoir, reposant sur celui-ci, une tuile de couverture technologique et **en ce que** ledit module multifonctionnel (116) présente une concavité globale orientée vers le bas couvrant deux tuiles canal, sur lesquelles il est encliqueté par des appendices en crochets (118).

13. Eléments modulaires selon la revendication 12, **caractérisés en ce que** ledit module fonctionnel (116) est muni sur son côté supérieur d'une paire de gradins (124, 126) sur lesquels repose un panneau photovoltaïque (132, 136).

14. Eléments modulaires selon la revendication 12, **caractérisés en ce que** ledit module fonctionnel (116) comprend une partie de plus grande longueur (128) et une partie de plus faible longueur (130) s'étendant à un niveau inférieur et supportant la partie d'extrémité de la partie de plus grande longueur (128) du module adjacent, qui repose sur celui-ci, pour créer ainsi la continuité de surface entre les parties de plus grande longueur (128) de plusieurs modules (116).

15. Eléments modulaires selon la revendication 13, **caractérisés en ce que** chaque module fonctionnel (116) :
- est muni d'appendices élastiques (134, 138) associés à ladite paire de gradins (124,126) et destinés à l'encliquetage dudit panneau photovoltaïque (132, 136),
- comprend des ferrures (140) qui se mettent en prise par accrochage avec les bords longitudinaux du module pour fixer ledit panneau photovoltaïque (132, 136),
- comprend deux paires de gradins (124, 126) positionnés à des distances différentes et à des niveaux différents pour supporter des panneaux photovoltaïques (132, 136) de largeurs différentes.
